# EUROPEAN PATENT APPLICATION

(11) **EP 2 474 936 A1**
(43) Date of publication of application: **11.07.2012**
(21) Application number: 10748304.2
(22) Date of filing: 10.02.2010
(51) Int. Cl.: G06K 7/00

(54) **PRODUCT IDENTITY DIGITAL IDENTIFICATION APPARATUS, INSPECTION APPARATUS, PRODUCT AND ANTI-COUNTERFEITING INSPECTION METHOD**

(30) Priority: 04.03.2009 CN 200910105867
(71) Applicant: Shenzhen Joinl Technology Co., Ltd, Guangdong 518000 (CN)
(72) Inventor: LI, Kaisheng, Shenzhen Guangdong 518000 (CN)
(74) Representative: Moore, Graeme Patrick
(86) International application number: PCT/CN2010/070618
(87) International publication number: WO 2010/099714

(57) **Abstract**

A product identity digital identification apparatus, an inspection apparatus, a product and an anti-counterfeiting inspection method are provided. The product identity digital identification apparatus includes: an identity identification code storage module, for storing an identity identification code uniquely corresponding to the product identity digital identification apparatus; a communication module, for communicating with a corresponding reader-writer; and a matching module, for performing a matching check according to a read request sent by the communication module, and sending a verification code to the communication module only when a password in the read request matches with a password for encrypting the identity identification code. The counterfeiter cannot acquire the identity identification code because the identity identification code in the product identity digital identification apparatus is encrypted. The authentication tool is a digitized product identity digital identification apparatus, which provides a unique result, popularizes the authentication process without requiring people to possess any professional authentication technique, and eliminates the probability that different people draw a conclusion from different observation angles, thereby obtaining a convincing authentication result.

## Description

### BACKGROUND OF THE INVENTION

### Field of the Invention

The present invention relates to a product identity digital identification apparatus, a product identity digital inspection apparatus for use in combination therewith, a product using the product identity digital identification apparatus, and an anti-counterfeiting inspection method for the product.

### Related Arts

Trademark is an important aspect of intellectual property protection, and also constitutes a part of the value of product. To prevent counterfeiting, many famous companies have adopted various anti-counterfeiting methods to identify authentic products, so as to enable consumers to identify counterfeits.

Currently, there are generally the following two international anti-counterfeiting methods adopting product identity identification.

One method is to use a tailor-made (for example, fabricated by a method such as holographic anti-counterfeiting) anti-counterfeiting tag, anti-counterfeiting card or anti-counterfeiting package as an anti-counterfeiting mark on a product. A large capital investment is required for fabricating anti-counterfeiting tags that are difficult to counterfeit, and there is always a method for counterfeiting. In addition, as the anti-counterfeiting principles of such anti-counterfeiting cards are varied, different methods are required for anti-counterfeiting inspection, and users have to be familiar with authentication techniques in order to distinguish authentic and counterfeit products. Moreover, as the anti-counterfeiting method largely relies on the subjective judgment of people, the judgments of different people may vary.

The other method is to attach an anti-counterfeiting serial number that is visible after being scratched onto a product and check whether the anti-counterfeiting serial number belongs to an authentic product through inquiry by phone or the Internet. However, anyone can copy the anti-counterfeiting serial number after scratching it, and the counterfeiter may simply buy one or several authentic products and then produce a large number of counterfeits according to the serial numbers. As a result, the result of inquiry by the Internet shows that every counterfeit is authentic.

The above two common anti-counterfeiting methods adopting product identity identification do not have a good anti-counterfeiting effect, and are difficult to promote and popularize.

### SUMMARY OF THE INVENTION

To overcome the above defects, the present invention is directed to a product identity digital identification apparatus capable of authenticating an identity of a product more conveniently and more accurately, a product identity digital inspection apparatus for use in combination therewith, a product using the product identity digital identification apparatus, and an anti-counterfeiting inspection method for the product.

The objectives of the present invention are achieved through the following technical solutions.

A product identity digital identification apparatus includes:
an identity identification code storage module, for storing an identity identification code uniquely corresponding to the product identity digital identification apparatus, where the identity identification code includes a plain sequential code uniquely corresponding to the product identity digital identification apparatus and an encrypted verification code;
a communication module, for sending the sequential code of the product identity digital identification apparatus to a matching reader-writer , and performing subsequent communication; and
a matching module, connected to the communication module and the identity identification code storage module, for performing a matching check according to a read request sent by the communication module, and sending the verification code stored in the identity identification code storage module to the communication module for reading-writing by the reader-writer only when a password in the read request matches with a password for encrypting the identity identification code.

The authentication code is uniquely corresponding to the product identity digital identification apparatus; the identity identification code further includes a read password corresponding to the authentication code; and
only when the password in the read request sent by the communication module is consistent with the read password, the matching module reads the verification code in the identity identification code, and sends the verification code to the communication module. Such a configuration eliminates the possibility of theft of the verification code in the matching module without using a password, thereby achieving higher security.

The identity identification code further includes a dynamic verification information code;
when the password in the read request sent by the communication module is consistent with the read password, the matching module reads at the same time the verification code and the dynamic verification information code in the identity identification code, and sends the verification code and the dynamic verification information code to the communication module; and
the product identity digital identification apparatus further includes a write module, for, after the matching module determines that the passwords match with each other and after the communication module receives a new dynamic verification information code from the reader-writer, writing the new dynamic verification information code into the identity identification code storage module.

A product identity digital inspection apparatus, for use in combination with the product identity digital identification apparatus, includes:
a back end database, for storing identity verification data corresponding to and consistent with identity identification codes stored in all product identity digital identification apparatus, where the identity verification data includes a plain sequential code uniquely corresponding to each of the product identity digital identification apparatuses, a corresponding read password and a verification code;
a reader-writer, capable of communicating with communication apparatuses in the product identity digital identification apparatus; and
an inspection module, for querying the identity verification data stored in the back end database for a read password corresponding to the sequential code according to the plain sequential code in the identity identification code of the product identity digital identification apparatus that is read by the reader-writer, and sending the read password as a read request to the product identity digital identification apparatus through the reader-writer; and for querying whether the verification code in the identity identification code of the product identity digital identification apparatus that is read by the reader-writer is consistent with the identity verification data in the back end database, so as to determine whether the inspection is passed.

The back end database further stores related production information of a product uniquely corresponding to the product identity digital identification apparatus; and the product identity digital inspection apparatus further includes a product digital identity presenting module, for presenting the related production information of the product stored in the back end database when the inspection module determines that the inspection is passed. Through such a configuration, the product identity digital inspection apparatus not only can be used as an anti-counterfeiting inspection platform, but can also be used as a query platform for related production information of products.

The identity verification data further includes a dynamic verification information code corresponding to each sequential code;
the inspection module queries whether the verification code and the dynamic verification information code in the identity identification code of the product identity digital identification apparatus that are read by the reader-writer are consistent with the identity verification data in the back end database, so as to determine whether the inspection is passed; and
correspondingly, the product identity digital inspection apparatus further includes a dynamic verification information code generation module, for dynamically generating a new dynamic verification information code after the inspection module determines that the inspection is passed, writing the new dynamic verification information code into the identity verification data of the back end database, and at the same time, sending the new dynamic verification information code to the product identity digital identification apparatus through the reader-writer. The dynamic verification information code is dynamically generated and rewritten into the product identity digital identification apparatus after the user successfully verifies the information last time, so that even if the identity identification code is cracked and reproduced, once one of reproductions passes the authentication and the corresponding dynamic verification information code is updated, the other reproductions cannot pass the authentication because the dynamic verification information codes in the reproductions are not updated. Such a method overcomes the disadvantage in the prior arts that the product identification is fixed and may be counterfeited and reproduced once leaked during transmission, which ensures that each product identity digital identification apparatus has a unique legal identification at any time, thereby further enhancing the uniqueness of the product identity digital identification apparatus.

The back end database and the inspection module are disposed in a network server, and the reader-writer is connected to the back end database through a network.

The dynamic verification information code generation module dynamically generates the dynamic verification information code according to current authentication information, and the authentication information includes at least one of current authentication time, a current IP address requesting authentication, a current reader-writer code, and times of authentication.

A product having the product identity digital identification apparatus includes a product identity digital identification apparatus, where the product identity digital identification apparatus includes:
an identity identification code storage module, for storing an identity identification code uniquely corresponding to the product identity digital identification apparatus, where the identity identification code includes a plain sequential code uniquely corresponding to the product identity digital identification apparatus and an encrypted verification code uniquely corresponding to the product identity digital identification apparatus;
a communication module, for sending the sequential code of the product identity digital identification apparatus to a matching reader-writer , and performing subsequent communication; and
a matching module, connected to the communication module and the identity identification code storage module, for performing a matching check according to a read request sent by the communication module, and sending the verification code stored in the identity identification code storage module to the communication module for reading-writing by the reader-writer only when a password in the read request matches with a password for encrypting the identity identification code.

An anti-counterfeiting inspection method for products includes:
A: connecting a product having a product identity digital identification apparatus to a reader-writer of a product identity digital inspection apparatus for communication;
B: the reader-writer of the product identity digital inspection apparatus reading a sequential code stored in an identity identification code storage module in the product identity digital identification apparatus;
C: an inspection module of the product identity digital inspection apparatus querying identity verification data stored in a back end database for a corresponding read password, and sending the read password as a read request to the product identity digital identification apparatus through the reader-writer;
D: a communication module of the product identity digital identification apparatus obtaining the read request in the step C, and a matching module performing a matching check according to the read request, and sending a verification code stored in the identity identification code storage module to the communication module for reading-writing by the reader-writer only when the password in the read request matches with the password for encrypting the identity identification code stored in the identity identification code storage module of the product identity digital identification apparatus; and
E: the product identity digital inspection apparatus querying whether the verification code in the identity identification code of the product identity digital identification apparatus that is read by the reader-writer is consistent with the identity verification data in the back end database, so as to determine whether the inspection is passed.

The back end database further stores related production information of a product uniquely corresponding to the product identity digital identification apparatus; and
correspondingly, the step E further includes presenting the related production information of the product stored in the back end database after determining that the inspection is passed. Through such a configuration, people not only can query whether a product having the product identity digital identification apparatus is authentic, but also can query other related production information of the product.
The identity identification code in the product identity digital identification apparatus further includes a dynamic verification information code; correspondingly, the identity verification data in the product identity digital inspection apparatus further includes a dynamic verification information code corresponding to each sequential code;
in the step D, when the password in the read request sent by the communication module is consistent with the read password, the verification code and the dynamic verification information code in the identity identification code are read at the same time, and sent to the communication module;
the step E is: querying whether the verification code and the dynamic verification information code in the identity identification code of the product identity digital identification apparatus that are read by the reader-writer are consistent with the identity verification data in the back end database, so as to determine whether the inspection is passed; and performing step F after the inspection is passed; and
the step F includes: the product identity digital inspection apparatus dynamically generating a new dynamic verification information code, and updating the identity verification data in the back end database to the new dynamic verification information code; and at the same time, sending the new dynamic verification information code to the product identity digital identification apparatus through the reader-writer, and updating the identity identification code of the product identity digital inspection apparatus to the new dynamic verification information code. The dynamic verification information code is dynamically generated and rewritten into the product identity digital identification apparatus after the user successfully verifies the information last time, so that even if the identity identification code is cracked and reproduced, once one of reproductions passes the authentication and the corresponding dynamic verification information code is updated, the other reproductions cannot pass the authentication because the dynamic verification information codes in the reproductions are not updated. Such a method overcomes the disadvantage in the prior arts that the product identification is fixed and may be counterfeited and reproduced once leaked during transmission, which ensures that each product identity digital identification apparatus has a unique legal identification at any time, thereby further enhancing the uniqueness of the product identity digital identification apparatus.

In the step F, the new dynamic verification information code is dynamically generated according to current authentication information, and the authentication information includes at least one of current authentication time, a current reader-writer code, and times of authentication.

The back end database is disposed in a network server, the reader-writer is connected to the back end database through a network; and the authentication information includes a current IP address requesting authentication.

In the present invention, as a unique encrypted identity identification code is set in the product identity digital identification apparatus, the identity identification code of the product identity digital identification apparatus can only be read by a matching product identity digital inspection apparatus, which queries the identity verification data of the back end database, and if corresponding consistent data can be found, it indicates that the product is authentic. The counterfeiter cannot acquire the identity identification code because the identity identification code in the product identity digital identification apparatus is unique, encrypted and non-reproducible. The authentication tool is a digitized product identity digital identification apparatus, which provides a unique result, popularizes the authentication process without requiring people to possess any professional authentication technique, and eliminates the probability that different people draw a conclusion from different observation angles, thereby obtaining a unique, convincing authentication result.

### BRIEF DESCRIPTION OF THE DRAWINGS

The present invention will become more fully understood from the detailed description given herein below for illustration only, and thus are not limitative of the present invention, and wherein:
FIG. 1 is a schematic structural view of a product identity digital identification apparatus according to an embodiment of the present invention;
FIG. 2 is a schematic view of a data storage structure of an identity identification code of a product identity digital identification apparatus according to an embodiment of the present invention;
FIG. 3 is a schematic structural view of a product identity digital inspection apparatus according to an embodiment of the present invention;
FIG. 4 is a schematic view of a data storage structure of identity verification data of a product identity digital inspection apparatus according to an embodiment of the present invention;
FIG. 5 is a flowchart of initialization when a new product identity digital identification apparatus is produced according to an embodiment of the present invention; and
FIG. 6 is a flowchart of an anti-counterfeiting inspection method for products according to an embodiment of the present invention.

### DETAILED DESCRIPTION OF THE INVENTION

The present invention is described in further detail below with reference to preferred embodiments and the accompanying drawings.

The inventive concept of the present invention is to construct an anti-counterfeiting inspection platform based on digital information, where a unique, non-reproducible identity identification code that can only be read by a particular tool is set in each product as a unique identification of the product, which, like DNA of animals and plants, has characteristics of uniqueness, non-reproducibility and theft prevention. By implanting DNA into each product, the product becomes unique with the DNA characteristics, so that DNA information may be read from the product carrying the DNA by using a corresponding particular tool, and then compared with a DNA registry of authentic products on a dedicated authentication platform, so as to immediately determine whether the product is authentic.

Owing to the non-reproducibility, the counterfeiter cannot counterfeit the product, and if the DNA is removed from an authentic product and implanted into a counterfeit, the authentic product is destroyed. Such a high counterfeiting cost fundamentally eliminates the possibility of counterfeiting.

As the anti-counterfeiting mark (that is, product DNA) is non-reproducible, and the authentication tool is a digitized instrument, which provides a unique result, and popularizes the authentication process without requiring people to possess any professional authentication technique, the probability that different people draw a conclusion from different observation angles is eliminated, thereby obtaining a unique, convincing authentication result.

Therefore, the present invention solves the defects of existing international anti-counterfeiting methods in the prior arts, and can really achieve the anti-counterfeiting purpose. Thus, consumers can easily obtain an authentication result, so that the intellectual property rights of famous trademarks of enterprises are protected, the impact of counterfeits is eliminated, and the market of products with independent intellectual property rights is protected.

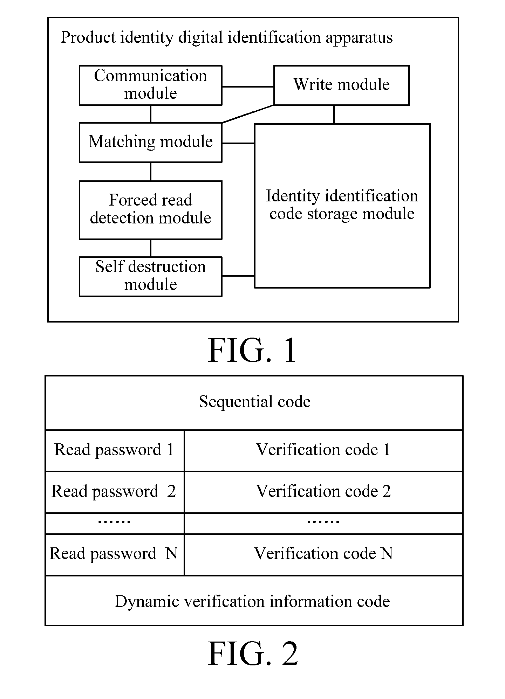

As shown in FIG. 1, a product identity digital identification apparatus of the present invention includes:
an identity identification code storage module, for storing an identity identification code (named 99DNA, or product DNA) uniquely corresponding to the product identity digital identification apparatus, where the identity identification code includes a plain sequential code uniquely corresponding to the product identity digital identification apparatus, a read password, a verification code encrypted by the encryption password and uniquely corresponding to the product identity digital identification apparatus, and a dynamic verification information code;
a wireless communication module, for sending the sequential code of the product identity digital identification apparatus to a matching reader-writer, and performing subsequent communication;
a matching module, connected to the communication module and the identity identification code storage module, for performing a matching check according to a read request sent by the communication module, and reading the verification code and the dynamic verification information code stored in the identity identification code storage module only when a password in the read request matches with the password for encrypting the identity identification code storage module, and sending the verification code and the dynamic verification information code to the communication module for reading-writing by the reader-writer; and
a write module, for, after the matching module determines that the passwords match with each other and after the communication module receives a new dynamic verification information code from the reader-writer, writing the new dynamic verification information code into the identity identification code storage module.

The product identity digital identification apparatus may be designed to have a small size of several millimeters and a thickness of 0.7 millimeters, may adopt various package modes, with advantages of being dustproof, waterproof, shock-resistant and high temperature resistant, and may be conveniently implanted into various products to become a part of the product. For example, a MIFARE chip complying with the ISO/ICE 144443A standard may be used.

Related characteristic parameter configuration of the chip is as follows:
1. Communication module
   MIFARE interface (ISO/ICE 144443A) is used.
   ● Operating frequency: 13.56 MHz
   ● Communication speed: 106KB Baud rate
   ● Read/write distance: within 100 mm (depending on antenna geometry)
   ● No battery: wireless data and energy transmission
   ● Chip technology: high speed CMOS EEPROM process
2. Identity identification code storage module
   An EEPROM is used to store the sequential code, the read password, the verification code and the dynamic verification information code, and a specific data structure design may be shown in FIG. 2.
   The length of the sequential code is temporarily set to 32 bits, and may be further extended as the number of the product identity digital identification apparatuses increases. In addition, the EEPROM is split into 16 sectors to store read passwords and corresponding verification codes, where each sector is divided into 4 data blocks, and each block has 16 bytes; each sector stores a set of read passwords and a set of verification codes, where the set of read passwords occupy one data block, that is, 16 bytes; the set of verification codes occupy three data blocks, that is, 48 bytes. 16 sets of read passwords and 16 sets of corresponding verification codes are stored in total, and each set of read passwords can only be used to read the corresponding set of verification codes. Such a design further enhances the security.
   ● Read passwords may be defined for each set of verification codes
   ● 100,000 times of write/erase operations
3. Security
   ● Mutual three pass authentication (ISO/ICE DIS9798-2)
   ● Data encryption on RF-channel with replay attach protection
   ● Two individual key sets per sector
   ● Transport key protects access to EEPROM on chip delivery
4. Antenna design of communication module
   ● 0.13 mm enameled copper wire
   ● 50-IOOCM long
   ● Wound into a square, rectangle, round or ellipse according to different product shapes
   ● Ultrasonic auto winding/auto butt-weld
5. Chip package
   ● Resin glue or crystal glue (material of clothing buttons) may be used for packaging, which is waterproof, sunscreen and bend resistant, and may be widely applied to products such as clothing and food.
   ● Rubber, PVC or PET may be used for packaging, which is mainly applied to products such as electronic and electrical appliances.

Further, the identity identification code storage module also includes:
a forced read detection module, for detecting whether the identity identification code stored in the identity identification code storage module is read in a forced manner; and
a self destruction module, connected to the forced read detection module, for being activated to destroy information in the whole product identity digital identification apparatus when the forced read detection module detects that the identity identification code stored in the identity identification code storage module is read in a forced manner or cracked or the password in the read request sent by the communication module is not consistent with the read password. Here, the self destruction module is a built-in function of the MIFARE chip.
As all data other than the plain sequential code in the product DNA in the identity identification code storage module is encrypted, and the self destruction function is provided, the internal data may be automatically destroyed in the case of illegal copying or cracking, thereby invalidating the product DNA. As such, it can be further ensured that the unique identity identification code stored in the product identity digital identification apparatus will not be illegally cracked and mass copied. Therefore, the problem that anti-counterfeiting methods such anti-counterfeiting tags, anti-counterfeiting cards and anti-counterfeiting packages may be counterfeited is solved.

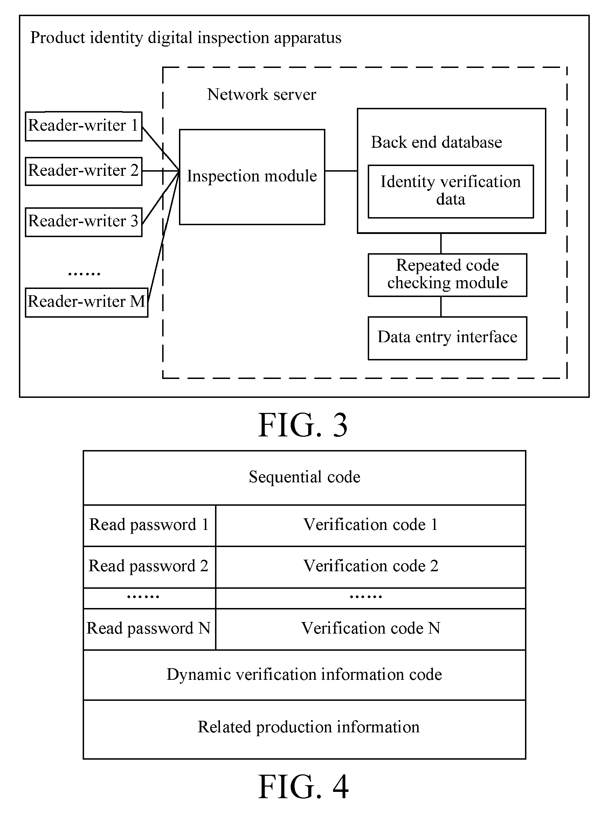

The structure of a product identity digital inspection apparatus for use in combination with the product identity digital identification apparatus is as shown in FIG. 3. The product identity digital inspection apparatus may also be referred to as an authentication platform, and includes:
a back end database, that is, product DNA registry, for storing identity verification data corresponding to and consistent with identity identification codes stored in all product identity digital identification apparatus, where the identity verification data includes a plain sequential code uniquely corresponding to each of the product identity digital identification apparatuses, a corresponding read password, a verification code uniquely corresponding to each of the product identity digital identification apparatuses, and a dynamic verification information code corresponding to each sequential code;
a reader-writer, capable of communicating with communication apparatuses in the product identity digital identification apparatus;
an inspection module, for querying the identity verification data stored in the back end database for a read password corresponding to the sequential code according to the plain sequential code in the identity identification code of the product identity digital identification apparatus that is read by the reader-writer, and sending the read password as a read request to the product identity digital identification apparatus through the reader-writer; and for querying whether the verification code and the dynamic verification information code in the identity identification code of the product identity digital identification apparatus that are read by the reader-writer are consistent with the identity verification data in the back end database, so as to determine whether the inspection is passed;
a dynamic verification information code generation module, for dynamically generating a new dynamic verification information code after the inspection module determines that the inspection is passed, writing the new dynamic verification information code into the identity verification data of the back end database, and at the same time, sending the new dynamic verification information code to the product identity digital identification apparatus through the reader-writer, where the dynamic verification information code generation module dynamically generates the dynamic verification information code according to current authentication information; and
a data entry interface and a repeated code checking module, where the repeated code checking module is used for checking whether a sequential code and a verification code in identity verification data newly input from the data entry interface already exist in the back end database, and if yes, controlling the back end database to reject the write operation. Such a configuration desirably ensures the uniqueness of the sequential code and the verification code.

The back end database further stores related production information of a product uniquely corresponding to the product identity digital identification apparatus; and the product identity digital inspection apparatus further includes a product digital identity presenting module, for presenting the related production information of the product stored in the back end database when the inspection module determines that the inspection is passed. Through such a configuration, the product identity digital inspection apparatus not only can be used as an anti-counterfeiting inspection platform, but can also be used as a query platform for related production information of products.

Same as the setting of the identity identification code in the product identity digital identification apparatus, sequential codes, read passwords, verification codes and dynamic verification information codes of the same format are correspondingly set in the identity verification data stored in the back end database, as shown in FIG. 4. The length of the sequential code is temporarily set to 32 bits, and may be further extended as the number of the product identity digital identification apparatuses increases. Likewise, 16 sets of read passwords and 16 sets of corresponding verification codes are set, where each set of read passwords occupy one data block, that is, 16 bytes; and each set of verification codes occupy three data blocks, that is, 48 bytes. The 16 sets of read passwords are one-to-one corresponding to each set of verification codes.

Different from the identity identification code stored in the product identity digital identification apparatus, a storage space is further provided in the identity verification data to store related production information. The related production information may include product picture, S/N serial number, barcode, name, specification, model, production date, agent or dealer, sales territory, invoice number, and warranty card number.

The back end database and the inspection module are both disposed in a network server, the reader-writer may be a chip capable of communicating with the communication apparatus in the product identity digital identification apparatus, and meanwhile, the reader-writer further needs to be provided with an interface connected to a network, so as to be connected to the back end database. The reader-writer may be formed with a network interface and directly connected to a network, or may be connected to the back end database through a computer interface such as USB or Bluetooth, through a computer connected to a network, and through an Internet authentication website, and feed back the inspection result to the user through a display interface of the computer.

For example, the reader-writer may be implemented using the following technical parameters.
● Compatible series: read/write standard of MIFARE chips supporting ISO/ICE 144443 A
● Operating frequency: 13.56 MHz
● Communication rate: 106KB Baud rate
● Communication interface: USB or Bluetooth wireless transmission interface
● Input power supply: via USB interface of computer
● Read/write time: <0.2S
● Read/write distance: 50 mm to 100 mm
● Operating temperature: -30°C--+60°C/Operating humidity: 10%--90%

For the back end database disposed in the network server, the dynamic verification information code generation module dynamically generates the dynamic verification information code according to current authentication information, such as current authentication time, a current IP address requesting authentication, a current reader-writer code, or times of authentication.

The addition of the dynamic verification information code into the identity identification code and the identity verification data in the back end database is to further ensure the uniqueness of DNA, thereby eliminating counterfeiting.

As the identity identification code (product DNA) in the product identity digital identification apparatus and the product identity digital inspection apparatus for use in combination therewith origins from DNA, the product DNA is also capable of growth like DNA. That is to say, data in the 99DNA is not fixed, but varies with time and space.

Although the data security of the product DNA has been highly guaranteed, it is still possible to clone the product DNA as the technology develops to a certain degree if the identification information is static. Therefore, dynamic data is written into the product DNA, to invalidate the copied product DNA, and ensure the uniqueness of the product DNA.

Therefore, even if 1000 copies of the product DNA can be produced, once one of these copies passes the authentication, the other 999 copies do not have new data. Such a method overcomes the disadvantage in the prior arts that the product identification is fixed and may be counterfeited and reproduced once leaked during transmission, which ensures that each legal product DNA is unique at any time, thereby further enhancing the uniqueness of the product DNA.

In addition, an authenticator directly connected to a back end database in a network may also be designed (definitely, a back end database may also be built in an authenticator if possible). The authenticator includes a reader-writer and a display screen, and the user may directly use the authenticator without logging into to an Internet authentication website through a computer, making it more convenient to use. Such authenticators may be widely disposed in public places such as shopping malls for the convenience of use of users.

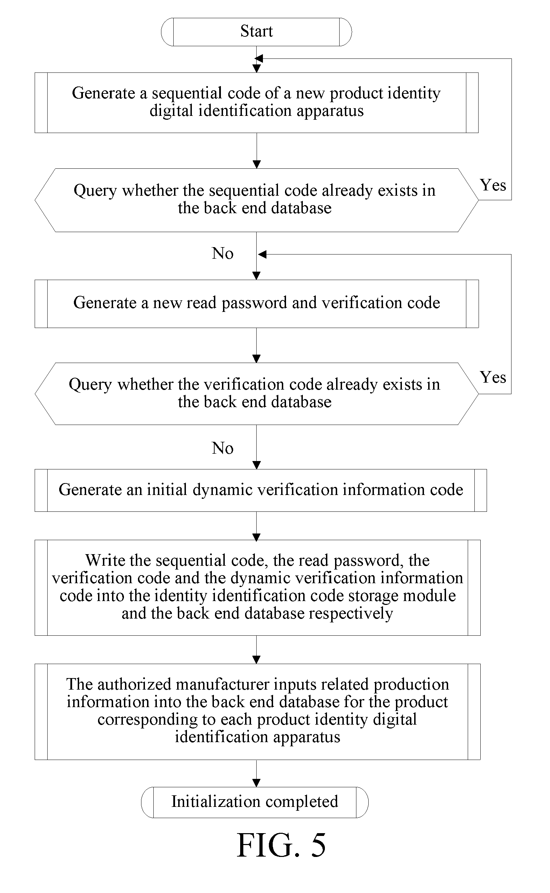

Before a new product identity digital identification apparatus is put into use, it needs to initialize the product identity digital identification apparatus, and update the back end database in the product identity digital inspection apparatus. As shown in FIG. 5, the process includes the following steps.

S01: Generate a sequential code of a new product identity digital identification apparatus.

S02: Query whether the sequential code already exists in the back end database, and if yes, perform step SO1 again; otherwise, perform step S03.

503: Generate a new password and authentication code randomly.

S04: Query whether the authentication code already exists in the back end database, and if yes, perform step S03 again; otherwise, perform step S05.

S05: Generate an initial dynamic verification information code randomly.

S06: Write the sequential code, the password, the authentication code and the dynamic verification information code generated in the above steps into the identity identification code storage module in the product identity digital identification apparatus as an identity identification code; and at the same time, write the sequential code, the password, the authentication code and the dynamic verification information code into the back end database of the product identity digital inspection apparatus as identity verification data, where the sequential code, the password, the verification code and the dynamic verification information code may be encrypted again (for example, adopting Base64 or md5 coding), and then written into the identity identification code storage module and the back end database. As a digital chip with multiple levels of encryption is used for storage, it is further ensured that the identity identification code (that is, product DNA information) of the product cannot be stolen.

After the above initialization operation is completed, such product identity digital identification apparatuses may be delivered to partner manufacturers, and the manufacturer may be authorized to update product information in the back end database according to the sequential code of each product identity digital identification apparatus; and meanwhile, related information of the manufacturer, such as manufacturer LOGO, manufacturer name, address, communication, website or QQ, may be written into the database.

The authorized manufacturer implants the product identity digital identification apparatus into the product, and may input related production information for the product corresponding to each product identity digital identification apparatus according to the authorization and through the data entry interface of the back end database by using the sequential code of the product identity digital identification apparatus as an identification mark, where the related production information may include product picture, S/N serial number, barcode, name, specification, model, production date, agent or dealer, sales territory, invoice number, warranty card number, and product trend.

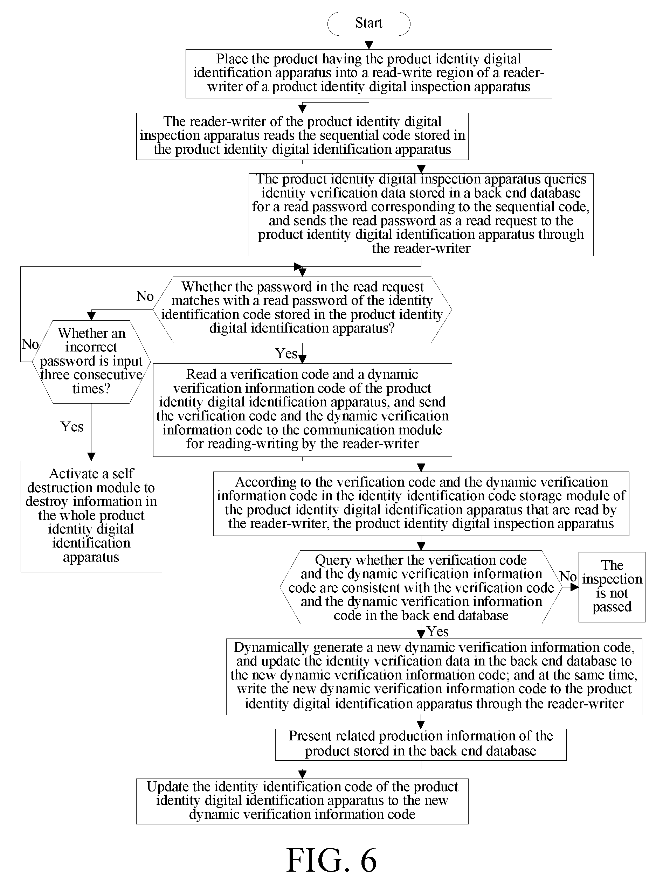

After buying a product claiming the use of the product identity digital identification apparatus for anti-counterfeiting, the user may check whether the product is authentic through the following method, which includes the following steps as shown in FIG. 6.

S 11: Place the product having the product identity digital identification apparatus into a read-write region of a reader-writer of a product identity digital inspection apparatus, open the 99DNA authentication platform, and click "Start Authentication", so that the reader-writer is connected to and communicates with the product identity digital identification apparatus.

S12: The reader-writer of the product identity digital inspection apparatus reads the sequential code stored in the identity identification code storage module in the product identity digital identification apparatus.

S13: An inspection module of the product identity digital inspection apparatus queries identity verification data stored in a back end database for a read password corresponding to the sequential code, and sends the read password as a read request to the product identity digital identification apparatus through the reader-writer.

S14: A communication module of the product identity digital identification apparatus obtains the read request in step S 13, and a matching module performs a matching check according to the read request.

If the password in the read request matches with a password for encrypting the identity identification code stored in the identity identification code storage module of the product identity digital identification apparatus, a verification code and a dynamic verification information code stored in the identity identification code in the identity identification code storage module in the product identity digital identification apparatus are read, and sent to the communication module for reading-writing by the reader-writer; and step S15 is performed.

If an incorrect password is input three consecutive times, a self destruction module is activated to destroy information in the whole product identity digital identification apparatus. The three chances are set in consideration of the possibility that an error may occur due to interference during data transmission, and if an incorrect password is input three consecutive times, it indicates that someone is attempting to maliciously crack the password, and accordingly, self destruction is activated.

S 15: The product identity digital inspection apparatus queries whether the verification code and the dynamic verification information code in the identity identification code of the product identity digital identification apparatus that are read by the reader-writer are consistent with the identity verification data in the back end database, and if yes, determines that the inspection is passed, and step S16 is performed; otherwise, displays information indicating that the inspection is not passed to the user.

S16: The product identity digital inspection apparatus dynamically generates a new dynamic verification information code, and updates the identity verification data in the back end database to the new dynamic verification information code; at the same time, sends the new dynamic verification information code to the product identity digital identification apparatus through the reader-writer, and updates the identity identification code of the product identity digital inspection apparatus to the new dynamic verification information code; and at the same time, presents related production information of the product stored in the back end database, facilitating the user to further understand specific production information of the product.

Although the present invention is described above in further detail through preferred embodiments, the present invention is not limited to the preferred embodiments. It should be understood by persons of ordinary skill in the art that simple deductions or replacements may be made without departing from the spirit of the present invention, for example, the communication module is a wireless communication module and the reader-writer is a wireless reader-writer; definitely, the present invention may also be implemented through wired connection, as long as the product identity digital identification apparatus has an interface reserved for connecting a wired reader-writer. All such deductions or replacements shall fall within the protection scope of the present invention.

## Claims

1. A product identity digital identification apparatus, comprising:
an identity identification code storage module, for storing an identity identification code uniquely corresponding to the product identity digital identification apparatus, wherein the identity identification code comprises a plain sequential code uniquely corresponding to the product identity digital identification apparatus and an encrypted verification code;
a communication module, for sending the sequential code of the product identity digital identification apparatus to a matching reader-writer , and performing subsequent communication; and
a matching module, connected to the communication module and the identity identification code storage module, for performing a matching check according to a read request sent by the communication module, and sending the verification code stored in the identity identification code storage module to the communication module for reading-writing by the reader-writer only when a password in the read request matches with a password for encrypting the identity identification code.

2. The product identity digital identification apparatus according to claim 1, wherein the authentication code is uniquely corresponding to the product identity digital identification apparatus; the identity identification code further comprises a read password corresponding to the authentication code; and
only when the password in the read request sent by the communication module is consistent with the read password, the matching module reads the verification code in the identity identification code, and sends the verification code to the communication module.

3. The product identity digital identification apparatus according to claim 1, wherein the identity identification code further comprises a dynamic verification information code;
when the password in the read request sent by the communication module is consistent with the read password, the matching module reads at the same time the verification code and the dynamic verification information code in the identity identification code, and sends the verification code and the dynamic verification information code to the communication module; and
the product identity digital identification apparatus further comprises a write module, for, after the matching module determines that the passwords match with each other and after the communication module receives a new dynamic verification information code from the reader-writer, writing the new dynamic verification information code into the identity identification code storage module.

4. A product identity digital inspection apparatus, for use in combination with the product identity digital identification apparatus according to claim 1, comprising:
a back end database, for storing identity verification data corresponding to and consistent with identity identification codes stored in all product identity digital identification apparatus, wherein the identity verification data comprises a plain sequential code uniquely corresponding to each of the product identity digital identification apparatuses, a corresponding read password and a verification code;
a reader-writer, capable of communicating with communication apparatuses in the product identity digital identification apparatus; and
an inspection module, for querying the identity verification data stored in the back end database for a read password corresponding to the sequential code according to the plain sequential code in the identity identification code of the product identity digital identification apparatus that is read by the reader-writer, and sending the read password as a read request to the product identity digital identification apparatus through the reader-writer; and for querying whether the verification code in the identity identification code of the product identity digital identification apparatus that is read by the reader-writer is consistent with the identity verification data in the back end database, so as to determine whether the inspection is passed.

5. The product identity digital inspection apparatus according to claim 4, wherein the back end database further stores related production information of a product uniquely corresponding to the product identity digital identification apparatus; and the product identity digital inspection apparatus further comprises a product digital identity presenting module, for presenting the related production information of the product stored in the back end database when the inspection module determines that the inspection is passed.

6. The product identity digital inspection apparatus according to claim 4, wherein the identity verification data further comprises a dynamic verification information code corresponding to each sequential code;
the inspection module queries whether the verification code and the dynamic verification information code in the identity identification code of the product identity digital identification apparatus that are read by the reader-writer are consistent with the identity verification data in the back end database, so as to determine whether the inspection is passed; and
correspondingly, the product identity digital inspection apparatus further comprises a dynamic verification information code generation module, for dynamically generating a new dynamic verification information code after the inspection module determines that the inspection is passed, writing the new dynamic verification information code into the identity verification data of the back end database, and at the same time, sending the new dynamic verification information code to the product identity digital identification apparatus through the reader-writer.

7. The product identity digital inspection apparatus according to claim 4 or 6, wherein the back end database and the inspection module are disposed in a network server, and the reader-writer is connected to the back end database through a network.

8. The product identity digital inspection apparatus according to claim 7, wherein the dynamic verification information code generation module dynamically generates the dynamic verification information code according to current authentication information, and the authentication information comprises at least one of current authentication time, a current IP address requesting authentication, a current reader-writer code, and times of authentication.

9. A product having the product identity digital identification apparatus according to claim 1, comprising a product identity digital identification apparatus, wherein the product identity digital identification apparatus comprises:
an identity identification code storage module, for storing an identity identification code uniquely corresponding to the product identity digital identification apparatus, wherein the identity identification code comprises a plain sequential code uniquely corresponding to the product identity digital identification apparatus and an encrypted verification code uniquely corresponding to the product identity digital identification apparatus;
a communication module, for sending the sequential code of the product identity digital identification apparatus to a matching reader-writer , and performing subsequent communication; and
a matching module, connected to the communication module and the identity identification code storage module, for performing a matching check according to a read request sent by the communication module, and sending the verification code stored in the identity identification code storage module to the communication module for reading-writing by the reader-writer only when a password in the read request matches with a password for encrypting the identity identification code.

10. An anti-counterfeiting inspection method for products, comprising:
A: connecting a product having a product identity digital identification apparatus to a reader-writer of a product identity digital inspection apparatus for communication;
B: the reader-writer of the product identity digital inspection apparatus reading a sequential code stored in an identity identification code storage module in the product identity digital identification apparatus;
C: an inspection module of the product identity digital inspection apparatus querying identity verification data stored in a back end database for a corresponding read password, and sending the read password as a read request to the product identity digital identification apparatus through the reader-writer;
D: a communication module of the product identity digital identification apparatus obtaining the read request in the step C, and a matching module performing a matching check according to the read request, and sending a verification code stored in the identity identification code storage module to the communication module for reading-writing by the reader-writer only when the password in the read request matches with the password for encrypting the identity identification code stored in the identity identification code storage module of the product identity digital identification apparatus; and
E: the product identity digital inspection apparatus querying whether the verification code in the identity identification code of the product identity digital identification apparatus that is read by the reader-writer is consistent with the identity verification data in the back end database, so as to determine whether the inspection is passed.

11. The anti-counterfeiting inspection method for products according to claim 10, wherein the back end database further stores related production information of a product uniquely corresponding to the product identity digital identification apparatus; and
correspondingly, the step E further comprises presenting the related production information of the product stored in the back end database after determining that the inspection is passed.

12. The anti-counterfeiting inspection method for products according to claim 10, wherein the identity identification code in the product identity digital identification apparatus further comprises a dynamic verification information code; correspondingly, the identity verification data in the product identity digital inspection apparatus further comprises a dynamic verification information code corresponding to each sequential code;
in the step D, when the password in the read request sent by the communication module is consistent with the read password, the verification code and the dynamic verification information code in the identity identification code are read at the same time, and sent to the communication module;
the step E is: querying whether the verification code and the dynamic verification information code in the identity identification code of the product identity digital identification apparatus that are read by the reader-writer are consistent with the identity verification data in the back end database, so as to determine whether the inspection is passed; and performing step F after the inspection is passed; and
the step F comprises: the product identity digital inspection apparatus dynamically generating a new dynamic verification information code, and updating the identity verification data in the back end database to the new dynamic verification information code; and at the same time, sending the new dynamic verification information code to the product identity digital identification apparatus through the reader-writer, and updating the identity identification code of the product identity digital inspection apparatus to the new dynamic verification information code.

13. The anti-counterfeiting inspection method for products according to claim 12, wherein in the step F, the new dynamic verification information code is dynamically generated according to current authentication information, and the authentication information comprises at least one of current authentication time, a current reader-writer code, and times of authentication.

14. The anti-counterfeiting inspection method for products according to claim 13, wherein the back end database is disposed in a network server, the reader-writer is connected to the back end database through a network; and the authentication information comprises a current IP address requesting authentication.
